# EUROPÄISCHE PATENTSCHRIFT

(11) **EP 1 363 772 B1**
(45) Veröffentlichungstag und Bekanntmachung des Hinweises auf die Patenterteilung: **06.10.2004**
(21) Anmeldenummer: 02722050.8
(22) Anmeldetag: 06.02.2002
(51) Int. Cl.: B32B 27/08, B32B 27/32, B29C 47/00, B29C 67/20, C08L 23/12, C08L 23/14

(54) **VERBUNDMATERIAL AUS EINER POLYPROPYLEN-DECKSCHICHT SOWIE EINER POLYPROPYLEN-SCHAUMFOLIE**
COMPOSITE MATERIAL COMPRISING A POLYPROPYLENE COVER LAYER AND A POLYPROPYLENE FOAM SHEET
MATERIAU COMPOSITE AVEC UNE COUCHE SUPERIEURE EN POLYPROPYLENE ET UNE FEUILLE EN MOUSSE EN POLYPROPYLENE

(30) Priorität: 06.02.2001 DE 10105591; 21.12.2001 DE 10163601
(43) Veröffentlichungstag der Anmeldung: 26.11.2003
(73) Patentinhaber: Fagerdala Deutschland GmbH, 99885 Ohrdruf (DE)
(72) Erfinder: LANDVIK, Dag, S-13482 Gustavsberg (SE); BRUNING, Jürgen, 99885 Ohrdruf (DE); LANG, Eberhard, 74080 Heilbronn (DE); ZIEGLER, Maik, 99887 Gräfenhain (DE); NYSTRÖM, Peter, 56634 Habo (SE); KARLSSON, Mats, 31044 Getinge (SE)
(74) Vertreter: Kaewert, Klaus
(86) Internationale Anmeldenummer: PCT/EP2002/001236
(87) Internationale Veröffentlichungsnummer: WO 2002/062571

(56) Entgegenhaltungen:
- EP-A- 0 515 223
- EP-A- 0 595 578
- US-A- 3 616 020
- US-A- 5 824 400

## Beschreibung

Die Erfindung betrifft einen Verbund einer kaschierfähigen bzw. verschweißbaren PP-Deckschicht, insbesondere aus einer TPE-O-Folie(thermoplastische Polyolefin-Elastomer, nachfolgend TPO genannt) oder aus einem Textil (Gewebe oder Vlies), mit einer Polypropylen(PP)Schaumschicht, insbesondere in der Form einer Folie oder Bahn.

Bekannt ist solches Verbundmaterial mit TPO-Folien als Deckschicht vor allem im Kraftfahrzeug(Kfz)Bereich.. Zu den Einzelheiten solcher TPO-Folien wird Bezug genommen die US-PS 6245856, US-PS 6140420, US-PS 5998524, US-PS 5985971, US-PS5763534, US-PS 5594080, US-PS 4871799, US-PS 6268064, US-PS 6180709, US-PS 5786403, US-PS 5783302, US-PS 5665822, US-PS 5011891, US-PS 4843129.

TPO-Folien werden zumeist extrudiert und auf einer Kalanderanlage zunächst geglättet und/oder genarbt bzw. geprägt bzw. mit einem Muster an der Oberfläche versehen. Anschließend wird eine Schaumschicht aus einem vernetzten Ethylen/Propylen-Copolymer aufkaschiert oder beim Kalandrieren zugefahren.

Unter Extrudieren versteht man das kontinuierliche Aufschmelzen von Kunststoff-Formmassen und Austragen durch eine formgebende Düse, auf die unten noch eingegangen wird.
Als Ausgangsmaterial kommen Kunststoffe in Granulatform, als Pulver oder auch als Mischungsrezeptur in Frage. Der feste Kunststoff muß zunächst aufgeschmolzen werden. Dann muß die Einsatzmischung homogenisiert werden und zuletzt auf Extrusionstemperatur abgekühlt werden.
Für diese Behandlung sind verschiedene Extruderbauformen gebräuchlich. Der Einschneckenextruder besteht aus nur einer Schnecke, die in einem umgebenden Gehäuse läuft. Die Schnecke wird über eine Eingangsöffnung/Trichter mit dem Ausgangsmaterial gespeist. Im Extruder wird der Kunststoff unter erheblichem Druckaufbau erwärmt und verformt, bis eine Plastifizierung/Schmelze entsteht. Die entstandene Schmelze wird solange gemischt, bis eine ausreichende Homogenisierung gegeben ist. Durch die Mischungsarbeit entsteht Wärme, welche kontinuierlich abgeführt werden muß. Die Mischungstemperatur ist regelmäßig eine andere Temperatur als die Extrusionstemperatur. Das ist die Schmelzetemperatur in der Extrusionsdüse. Diese Temperatur ist geringer. Zumeist ist deshalb nach dem Homogenisieren eine Kühlung erforderlich.
Die entstehende und abzuführende Wärme wird über das umgebende, gekühlte Gehäuse und bei zeitgemäßen Einrichtungen auch über die mit einer Kühlung versehene Schnecke abgeführt. Beide Maschinenteile können bei der Plastifizierung auch zur Erwärmung genutzt werden.

Die TPO-Folien können sofort dünn extrudiert werden und/oder durch Kalandrieren auf ein bestimmtes dünnes Maß gebracht werden.
Um zeitgemäßen Folienbreiten gerecht zu werden, wird zumeist eine Breitschlitzdüse verwendet. Aus der Breitschlitzdüse fällt das Material quasi als thermoplastische Folie an. Zwischen den Kalanderwalzen findet die weitere Maßgebung(Breitengebung und/oder Dickengebung) statt.
Es sind auch Verfahren bekannt, bei denen die extrudierte Schmelze hin- und hergehend im Kalanderspalt abgelegt wird.

Beim Kalandrieren wird die Folie zwischen mindestens ein Kalanderwalzenpaar gefahren. Vorzugsweise sind mehrere Walzen hintereinander angeordnet. Es wird unterschieden zwischen der Zahl der Walzen und zwischen deren Anordnung. Die Kalanderwalzenzahl geht zumeist nicht über fünf hinaus. Die Kalanderwalzen können alle in einer waagerechten Ebene oder einer schrägen Ebene oder vertikalen Ebene angeordnet sein(I-Form). Es sind auch Anordnungen bekannt, bei denen die Walzen in der Seitenansicht eine L-Form oder eine Z-Form oder eine S-Form oder eine F-Form oder eine A-Form oder eine Dreieck-Form oder andere Formen bilden. Entscheidend ist, daß die Folie zunächst in einen Walzenspalt gefahren wird. Dabei setzt eine bleibende Verformung voraus, daß die Verformung über die Elastizitätsgrenze hinausgeht. Bei Kunststoff wird die Elastizitätsgrenze durch Erwärmung herabgesetzt oder dadurch herabgesetzt, daß die Folie in einer Hitze (ohne zusätzliche Erwärmung) aus dem Extrusionsvorgang zwischen die Kalanderwalzen gefahren wird.

Die PP-Kunststoffschaumschicht besteht aus Gründen nachfolgend erläuterter Anwendungen aus einem vernetzten Kunststoff. Alle bei der Vernetzung vorkommenden Kunststoffe besitzen Makromoleküle, die durch eine Vernetzungsreaktion miteinander verbunden werden. Für die Verarbeitung müssen die Kunststoff als lösliche bzw. schmelzbarer Ausgangsstoffe vorliegen, die aus weitgehend linearen bzw. teilvemetzten Molekülen oder aus niedermolekularen Verbindungen bestehen. Die Schmelzbarkeit eröffnet auch den Extrusionsweg. Dabei kann auch ein Kunststoffschaum erzeugt werden. Der eigentliche Werkstoff entsteht erst bei der Verarbeitung durch Vernetzungsreaktion. Die Vemetzungsreaktion kann durch Erwärmung, Bestrahlung, chemisch und in anderer Weise erfolgen.

Ein großer Anwendungsbereich der hier erörterten Verbundmaterialien mit vernetztem PP-Schaum ist der Kfz-Innenbereich. Im Kfz finden sich eine Vielzahl von Teilen mit einer Deckfläche, die ein bestimmtes Dekor oder eine bestimmte Beschaffenheit besitzen soll. So kann die Deckfläche den Eindruck einer Auskleidung in Leder erwecken. Das Leder setzt den Eindruck von Hochwertigkeit. Es kann aber auch ein anderes Dekor gewünscht sein.

Als Deckschicht kann auch ein Textil gewünscht sein. Bei den Textilien wird zwischen Gewebe und Vlies unterschieden. Beim Gewebe sind die Textilfasern in einer bestimmten Ordnung miteinander verwirkt bzw. ineinander verschlungen. Das gibt dem Gewebe aus sicher heraus Festigkeit.
Bei dem Vlies werden die Fasern ungeordnet(wirr) aufeinander abgelegt und z.B. durch Kleben oder Schweißen miteinander verbunden.

Die Deckschicht an Kfz-Teilen soll nicht nur ein Dekor besitzen. Sie muß auch den vorkommenden Innentemperaturen im Kfz standhalten.

Beide Aufgaben werden vorzüglich durch Verbundmaterial mit einer eingangs beschriebenen Deckschicht und mit einer vernetzten Kunststoffschaumschicht erfüllt. Das gilt für Armaturenbretter, Armlehnen Türseitenverkleidungen, Hutablagen, für die Verkleidung von Hutablagen und anderes. Mit dem Schaumrücken des Verbundmateriales können vorteilhafterweise auch Unebenheiten ausgeglichen werden und kann eine weiche, nachgiebige Oberfläche mit angenehmer Anmutung geschaffen werden.

Für die vemetzte Kunststoffschaumschicht findet ein Ethylen/Propylen-Copolymer Verwendung. In zeitgemäßen Kfz müssen die verwendeten Verkleidungsteile eine bestimmte Form erhalten, die durch Thermoformieren des Verbundmaterials erreichbar ist. Zumeist findet das Thermoformieren als Tiefziehen statt.

Das bekannte Verbundmaterial mit dem PP-Deckmaterial und dem vernetzten Kunststoffschaum hat sich bewährt, gleichwohl hat sich die Erfindung die Aufgabe gestellt, derartiges Material zu verbessern. Dabei geht die Erfindung von der Erkenntnis aus, daß die Warmfestigkeit des bekannten Verbundmaterials mit etwa 110 Grad Celsius dessen Tiefziehfähigkeit im wesentlichen bestimmt.

Nach der Erfindung wird eine bessere Tiefziehfähigkeit dadurch erreicht, daß anstelle der bisherigen vernetzten PP-Schaumschicht eine thermoplastische und unvernetzte Polyproyplen (PP)Schaumschicht aufgebracht wird. Die Deckschicht ist bereits bei relativ geringem Anteil an PP mit der PP-Schaumschicht kaschierfähig bzw. verschweißbar. Zumutbare Ergebnisse werden bereits erreicht, wenn der Anteil an PP in der Deckschicht 5Gew%, bezogen auf das Gewicht des Kunststoffes in der Deckschicht ist. Je größer der PP-Anteil ist, desto besser sind die Kaschier- und Schweißergebnisse. Vorzugsweise ist der PP-Anteil deshalb mindestens 30Gew% und noch weiter bevorzugt mindestens 50Gew%. Die TPO-Folie erreicht das mit einer entsprechenden Matrix aus PP.

Nach der Erfindung besteht die unvemetzte PP-Schaumschicht aus einem speziellen PP(Polypropylen) mit high Meltstrength (HMS). Als unvernetzt wird dabei auch ein verzweigtes Polypropylen angesehen. Verzweigtes PP kann aus strukturisomeren Propylenpolymeren bestehen, die in einem der Polymersynthese nachfolgenden Modifizierungsschritt entstehen. Besonders günstig sind Langkettenverzweigungen. Das verzweigte PP ist der Struktur von LDPE ähnlich, ist thermoplastisch und gut verschäumbar. Vernetztes PP ist je nach Grad der Vernetzung verschäumbar, aber auf Grund der Vernetzung nicht mehr einschmelzbar.

Das erfindungsgemäß verwendete unvernetzte PP wird aus der Vielzahl angebotener unvernetzter PP-Materialien ausgewählt und zeichnet sich von anderem unvernetzten PP dadurch aus, daß ein feiner Schmelzestrang eine bestimmte Schmelzefestigkeit zeigt. Zur Bestimmung der Schmelzefestigkeit wird der Kunststoff in einem Zylinder schmelzflüssig gehalten und mit einem Kolben durch eine Düse ausgedrückt. Der austretende Schmelzestrang wird von zwei Rollen oder Walzen erfaßt und unter zunehmender Beschleunigung abgezogen, bis es zum Abriß kommt. Die Zugkraft beim Abreißen ist die Schmelzespannung.
Die bestimmenden Parameter des Vorganges sind:
Düsendurchmesser 1mm,
Düsenlänge 20 mm,
Schmelzetemperatur 200 Grad Celsius,
Zylinder mit Innendurchmesser 15 mm,
Beschleunigung des Schmelzeabzuges 0,12 mm pro Sekunde²
Schmelzeausstoß aus der Düse mit 1 Kubikzentimeter pro Minute)
Schmelzespannung soll mindestens 5 g(cN) sein.

Das PP HMS kann auch in Mischungen mit anderen Kunststoffen vorkommen. Vorzugsweise findet eine Mischung aus PP HMS und PP-Homopolymeren oder PP-Copolymeren statt. Dabei werden die PP-Homopolymere bevorzugt. Je nach Dichte des PP-Schaumes kann 5 bis 70Gew% PP-Homopolymer, bezogen auf die gesamte Kunststoffmenge, dem PP HMS zugegeben werden.
PP HMS ist ein handelsüblicher Kunststoff, z.B. wird PP-HMS von der Firm Basell und von der Firma Borealis angeboten.
PP HMS ist unter anderem beschrieben in folgenden Druckschriften:
Zeitschrift Kunststoff 1992, S.671ff. US-A-4916198, DE-B-3220269, DE-A-1504355, DE-B-6307637.

Zum Schäumen des erfindungsgemäß verwendeten Kunststoffes kommen diverse Treibmittel in Betracht. Es wird zwischen chemischen und physikalischen Treibmitteln unterschieden. Chemische Treibmittel können als Zumischungsanteil dem Ausgangsmaterial zugegeben werden und reagieren zum Beispiel unter Druck und/oder Temperatur durch Freisetzung von Gas. Zu den chemischen Treibmitteln gehört die Isocyanat-Wasser-Reaktion. Sie liefert gasförmiges Kohlendioxid als Treibgas. Beim physikalischen Verfahren wird durch den Zusatz niedrigsiedender Flüssigkeiten das exotherm reagierende Gemisch durch Verdampfen des Treibmittels aufgeschäumt. Dabei werden anstelle der früher verwendeten FCKW aus Gründen des Umweltschutzes heute die Ozonschicht weniger bzw. nicht schädigenden HF ( C) KW und/oder Kohlenwasserstoffe verwendet.

Nach einem weiteren Merkmal der Erfindung finden besonders die Kohlenwasserstoffe wie Propan, Butan, Isobutan, Pentan ausschließlich oder zusammen mit anderen Treibmitteln Anwendung. Der Treibmittelanteil der Kohlenwasserstoff beträgt in der Treibmittelmischung mindestens 50Gew% bezogen auf die gesamte Treibmittelmenge. Vorzugsweise ist der Anteil der Kohlenwasserstoffe höher, wahlweise auch 90Gew% und mehr, bezogen auf die gesamte Treibmittelmenge sein. Das gilt für geringe Schichtdicken des Schaumstoffes, ohne daß es zu nachteiligen Wirkungen auf den Schaum kommt.
Andere Anteile der Treibmittelmischung können inerte Gase sein, insbesondere Kohlendioxid und Stickstoff. Ihr Anteil an der gesamten Treibmittelmischung kann wahlweise bis zu 25Gew% sein.
Der Treibmittelanteil beträgt - bezogen auf die gesamte Kunststoffmenge je nach Schaumdichte und je nach Zusammensetzung der Treibmittelmischung zwischen 3 und 15Gew%

Günstig ist eine Herstellung des Schaumes mittels Extruder. Die oben beschriebenen physikalischen Treibmittel werden vorzugsweise in Flüssigform an geeigneter Stelle in den Extruder eingespritzt. Geeignet für die Einspritzung ist die Dispergierungszone bzw. die Homogenisierungszone am Extruder. Der Extruder verteilt das Treibmittel in feinster Form in der Schmelze. Dieser Zustand kann durch Stabilisatoren und Keimbildner unterstützt werden. Im Extruder findet vor der Extrusionsdüse ein erheblicher Druckaufbau in der Schmelze statt. Die Schmelze tritt dann aus der Düse in einen Raum mit wesentlich geringerem Umgebungsdruck, vorzugsweise naturgegebenem Umgebungsdruck. Aufgrund des Druckabfalls dehnt sich das in der Schmelze fein verteilte Treibmittel/Treibgas aus. Es kommt zu einer Zellbildung in der Schmelze. Die Zellgröße und das Maß des Aufschäumens (Aufschäumgrad) lassen sich mit diversen Hilfsmitteln einschließlich den genannten Stabilisatoren und Keimbildnern steuern.
Die vorstehend beschriebene Herstellung unvernetzten PP-Schaumes kann als Direktschäumung bezeichnet werden, weil der gewünschte Aufschäumgrad in einem Schritt erzeugt wird. Das unterscheidet sich wesentlich von der bisherigen Herstellung vernetzten Schaumes für derartiges Verbundmaterial: Bei der herkömmlichen Verfahrensweise wird zunächst eine Schaumbahn mit geringem Aufschäumgrad erzeugt. Das eigentliche Aufschäumen erfolgt in einem zweiten Schritt bei einem anschließenden Durchlauf durch einen Ofen. Im Ofen findet eine Vernetzung als Voraussetzung für ein bleibendes Schäumen statt. Bei diesem Vorgang beinhalten der Ofen und die Zuführungs- und Abführungseinrichtungen einen vergleichsweise großen baulichen Aufwand. Vergleichsweise zeigt das bisherige Verfahren auch einen großen Energieaufwand.

Das erfindungsgemäße Verbundmaterial zeichnet sich durch eine höhere Warmfestigkeit als das bekannte Verbundmaterial aus. Gegenüber bekanntem vernetztem PP-Schaum kann ein unvernetzter PP-Schaum mit höherem PP-Gehalt verwendet werden, welcher dem Schaum die höhere Wärmebeständigkeit und infolgedessen eine bessere Tiefziehfähigkeit vermittelt.

Die Zellgröße des Schaumes beträgt 0,5 bis 4 mm, vorzugsweise 0,5 bis 1,5 mm. Die Verbundmaterialdicke beträgt 0,5 bis 10 mm und mehr, vorzugsweise 2 bis 4 mm. Die größeren Dicken werden vorzugsweise dadurch erreicht, daß weitere PP-Schaumschichten aufkaschiert werden.
In dem Verbundmaterial hat die Deckschicht vorzugsweise ein Gewicht von mindestens 120 Gramm pro Quadratmeter, weiter bevorzugt von mindestens 320 Gramm pro Quadratmeter und noch weiter bevorzugt von mindestens 520 Gramm pro Quadratmeter. Bei Textilien entspricht die Angabe des Flächengewichtes der üblichen Kennzeichnung.
Aus Gründen der Einheitlichkeit ist das Flächengewicht auch für die Folien und Bahnen angegeben worden. Vom Flächengewicht findet der Fachmann über das spez.
Materialgewicht und über das Folien- und Bahnenvolumen pro Quadratmeter zur Folien- und Bahnendicke.
Das höhere Flächengewicht der Deckschicht verbessert verschiedene Eigenschaften wie z.B. die Festigkeit des Verbundmaterials bzw. der Deckschicht.

Das Raumgewicht des Verbundmaterials beträgt 20 bis 400 kg pro Kubikmeter, vorzugsweise 30 bis 150 kg pro Kubikmeter.

Das erfindungsgemäße Verbundmaterial zeigt auch eine größere Tiefziehfähigkeit, sowohl in positiver als auch in negativer Richtung. D.h. sowohl bei Auswölbungen der Folie in Richtung des PP-Schaumes als auch bei Auswölbungen in Richtung der PP-Deckschicht. Mangels der Vernetzung kann das erfindungsgemäße Verbundmaterial leichter recycelt werden.

Vorteilhafterweise kann das Verbundmaterial sich bei entsprechender Erwärmung so an die formgebende Fläche anlegen, daß sich Dekormuster in der Sichtfläche des Verbundmaterials abbilden. Typische Dekormuster sind sogenannte Narben, die das Aussehen von Leder vermitteln. Die notwendige Erwärmung kann eine kurze Überhitzung der Verbundoberfläche auf Temperaturen um oder über den Schmelzpunkt erforderlich machen, um eine gewünschte Abbildung des Dekormusters zu bewirken.

Die hohe Warmfestigkeit und größere Tiefziehfähigkeit eröffnet über den oben beschriebenen bekannten Verarbeitungsweg auch neue Verarbeitungswege.

Die PP-Schaumschicht und die PP-Deckschicht können durch Kaschieren verbunden werden Beim Kaschieren werden der PP-Schaum und/oder die PP-Deckschicht an ihren Berührungsflächen kurzfristig plastifiziert. Die minimale Erwärmung liegt bei 20 Grad Celsius unter dem Schmelzpunkt. Die PP-Deckschicht kann dabei dadurch auf die notwendige Temperatur gebracht werden, daß von einer hochwarmen Berührungsfläche der PP-Schaumschicht Wärme an die PP-Deckschicht abgegeben wird. Die Wärme kann auch von einer hochwarmen Berührungsfläche der PP-Deckschicht an eine weniger warme Berührungsfläche der PP-Schaumschicht fließen.

Die Schmelzpunkt der Deckschicht liegt bei Verwendung von TPO je nach Materialauswahl bei 120 bis 170 Grad Celsius, die von PP bei 145 bis 170 Grad Celsius. Für beide Schichten des Verbundmaterials wird die Materialauswahl so getroffen, daß das Verbundmaterial eine Warmfestigkeit von 140 bis 180 Grad Celsius aufweist. Dabei wird vorzugsweise ein PP-Schaummaterial mit einem Schmelzpunkt von mehr als 155 Grad Celsius, noch weiter bevorzugt von mehr als 165 Grad Celsius verwendet.

Die Schmelztemperatur kann bei der Erwärmung der Kaschierflächen auf Kaschiertemperatur kurzzeitig bis 250 Grad Celsius erreichen, ohne daß es zu einer wesentlichen Beeinträchtigung des Materials kommt. Die kurzfristige Erwärmung stellt sicher, daß nur oberste Materialschichten plastifiziert werden und die darunter liegenden Schichten unbeeinträchtigt bleiben. Die erwärmten Folien werden sofort zwischen geeigneten Rollen oder Walzen gegeneinander gefahren/gedrückt.
Es liegt dabei im Rahmen der Erfindung, wenn bei dem PP-Schaum und/oder der PP-Deckschicht keine optimale Temperatur eingehalten wird, d.h. wenn die Temperatur an der einen oder anderen Fläche sehr viel weiter unter dem Schmelzpunkt liegt. Dann entsteht eine Verbindung mit geringerer Haltbarkeit/Abzugfestigkeit als bei dem bevorzugten Kaschiervorgang.

Der Kaschiervorgang kann in einem separaten Arbeitsschritt erfolgen. Dann werden die notwendigen Oberflächentemperaturen mit Hilfe geeigneter Wärmequellen herbeigeführt. Geeignete Wärmequellen sind z.B. Wärmestrahler oder Warmluftgebläse. Die Wärme kann auch durch Berührung mit heißen Walzen oder durch Beflammung aufgebracht werden.

Die Verbindung der TPO-Folie mit dem PP-Schaum kann auch beim Kalandrieren dadurch erfolgen, daß nach der Formgebung der TPO-Folie der PP-Schaum als Folie gegen die heiße TPO-Folie gefahren wird. Dabei kann der Wärmeinhalt der TPO-Folie genutzt werden, um die Berührungsfläche der PP-Schaumfolie auf die gewünschte Temperatur zu bringen. Je nach Temperatur der TPO-Folie kann sogar eine kalte(Raumtemperatur) oder geringer vorgewärmte PP-Schaumfolie an der Berührungsfläche von der TPO-Folie auf Kaschiertemperatur gebracht werden.

Eine weitere Variante der Erfindung sieht vor, daß die Schaumfolie auf die Deckschicht aufextrudierte wird. Wegen der Einzelheiten dieses Verfahrens wird Bezug genommen auf Kunststofftechnik Thermoplastische Partikelschaumstoffe, 1996, VDI Verlag GmbH, Düsseldorf, Abschnitt Neue Verfahren zur Verbundbauteil-Entwicklung, Bild 9 und zugehörige Beschreibung. Bei dem Verfahren kann mit dem aufextrudierten Kunststoffschaum eine ausreichende Erwärmung der Berührungsfläche der Deckschicht erfolgen, so daß direkt eine Verbindung entsteht. Wahlweise kann die Verbindung auch durch eine Vorwärmung der Deckschicht begünstigt werden.

Wie oben bereits deutlich gemacht, wird ein großer Anwendungsbereich bei Kraftfahrzeugen gesehen. Das erfindungsgemäße Verbundmaterial kann dort Werkstoffe ersetzen an:
Verkleidungs- und Anbauteilen, Sonnenblenden, A-, B- und C-Säulenverkleidungen, Rammschutzleisten
Verbesserung kann dabei erreicht werden in:
   Ausbildung von Kantenbereichen und Umbug, Vereinfachung der Herstellung, Verringerung der Kosten, Energieeinsparung, Verbesserung der Festigkeit, Prozeßsicherheit, geringere Taktzeit, verbesserte Bedingungen für das Einlegen von Scharnieren, Licht- oder Spiegelhalterungen, Rahmen, Klipse, elektronischen Bauteilen, Inlays aus anderen Materialien, Anbaulemente,
   Verbesserung der haptischen Eigenschaften, ökologischer Gewinn, Recyclingfähigkeit, bessere Dekorqualitäten, höhere Maßgenauigkeiten, Gewichtreduzierung, sortenreine Herstellung, Einsparung der Temperung von Kunststoffteilen, Vermeidung von Faltenbildung, gleichbleibende Qualität, verbesserter stoffschlüssiger und formschlüssiger Verbund,

Das erfindungsgemäße Verbundmaterial eignet sich über die beschriebenen Anwendungsbereiche im Kfz-Bereich hinaus für diverse Anwendungen, bei denen es auf Oberflächen und Verschönerung(Dekorflächen) ankommt. Zu den anderen Anwendungsbereichen gehören Möbel, Kindersitze, Taschen jeder Art, Etuien.
Auch die Anwendung auf Fußbodenheizungen ist möglich. Fußbodenheizungen besitzen eine im Fußboden verlegte Heizschlange. Üblicherweise wird die Heizschlange in Formkörper eingebettet. Die Oberfläche des Formkörpers kann mit dem erfindungsgemäßen Verbundmaterial gestaltet werden.
Bei Verkleidungen von Türen und in Verbindung mit aufkaschierten Textilien kann das erfindungsgemäße Verbundmaterial andere Werkstoffe ersetzen.
Desgleichen können andere Werkstoffe an Kniekissen oder an Isoliermatten mit den erfindungsgemäßen Verbundstoffen ersetzt werden.

Bei der Anwendung kann sich die Handhabung des Verbundmaterials z.B. auf einen Materialzuschnitte beschränken. In anderen Anwendungen kann das Verbundmaterial in der Bahn oder als Zuschnitt zusätzlich thermoformiert werden. Beim Thermoformieren wird das Verbundmaterial erwärmt und anschließend verformt. Die notwendige Wärmezufuhr verringert sich, wenn das Verbundmaterial aus seiner Herstellung noch einen gewissen Wärmeinhalt besitzt.

Das Thermoformieren herkömmlich in einer Presse zwischen Matrize und Patrize erfolgen. Es kann auch eine Thermoformierung allein oder zusätzlich durch Anlegen eines Saugzuges(Unterdruckes) und/oder an der gegenüberliegenden Seite durch Anlegen eines (Luft)Druckes erfolgen.

In weiteren Anwendungen kann eine Verbindung des Zuschnittes mit anderen ganz oder teilweise fertigen weiteren Formteilen/Werkstücken stattfinden. Der Begriff Formteile/Werkstück ist hier weit zu verstehen. Es kann sich auch um gerade und/oder rund und/oder eckige Teile handeln. Es kann sich auch um Textilien oder weitere Folien handeln. Mit dem erfindungsgemäßen Verbundmaterial können Möbelteile wie Lehnen und Sitze gestaltet werden. Die oben beschrieben PP-Deckschicht bleibt in der Verbindung mit einem anderen Formteil/Werkstück regelmäßig außen. Dort soll die Deckschicht die Oberfläche bilden. Die PP-Schaumschicht liegt dann innen.
Für die Verbindung sind diverse Verbindungstechniken geeignet, z.B. Kleben, Schweißen..

Die weiteren Formteile/Werkstücke, mit denen eine Verbindung gewünscht wird, können ungeschäumte oder geschäumte Kunststoffteile sein. Mit vielen Materialien ist eine Klebung unproblematisch. Bei weiteren Formteilen/Werkstücken kann auch eine Verbindung in Form eines Schweißens oder Kaschierens erfolgen.
Die Schweiß- und Kaschierverbindung mit einem weiteren Formteil/Werkstück setzt wie bei dem oben beschriebenen Kaschieren und Schweißen eine ausreichende Erwärmung der Berührungsflächen voraus. Die Mittel zur Erwärmung können die gleichen wie bei der oben beschriebenen Kaschierverbindung oder Schweißverbindung zwischen PP-Deckschicht und PP-Schaumschicht sein. Neben der Erwärmung ist die Schweißfähigkeit bzw.
Kaschierfähigkeit Voraussetzung. Es gelten die gleichen Anforderungen an den Mindestanteil von PP im Material wie bei der Herstellung des Verbundmaterials aus PP-Deckschicht und PP-Schaumschicht. Besonders günstige Ergebnisse stellen sich bei gleichartigen Werkstoffen in dem PP-Schaum und in dem weiteren Formteil/Werkstück ein. Deshalb bestehen die weiteren Formteile/Werkstücke vorzugsweise zumindest teilweise auch aus PP.

Soweit bei der Verbindung vorgesehen ist, daß sich das Verbundmaterial an eine geformte Oberfläche des korrespondierenden Formteiles/Werkstückes ganz oder teilweise anlegt, wird das Verbundmaterial wahlweise durch vorhergehende Thermoformierung der Oberfläche angepaßt. Zur Umsetzung der Thermoformierung bedient sich die Erfindung auch bekannter Einrichtungen und Verfahren, wie sie beschrieben sind in Kunststofftechnik, Thermoplastische Partikelschaumstoffe, 1996, VDI-Verlag GmbH, Düsseldorf, Abschnitt Neue Verfahren der Verbundbauteil-Entwicklung, Seiten 133 bis 163.

Wahlweise findet die Thermoformierung des Verbundmaterials in einem separaten Vorgang statt. Die separate Thermoformierung kann eine werkzeugexteme Erwärmung des Verbundmateriales beinhalten. Das erleichtert eine homogene Erwärmung, so daß auf eine Temperung des entstandenen Formteiles verzichtet werden kann.
Die Thermoformierung kann dabei zeitlich so weit vor der Verbindung mit einem weiteren Formteil/Werkstück liegen, daß das Verbundmaterial praktisch wieder erkaltet und für eine Verschweißung bzw. Kaschierung an den Schweiß- und Kaschierflächen vollständig wiedererwärmt werden muß. Bei geringem zeitlichen Abstand besitzt das Verbundmaterial an den Schweißflächen bzw. Kaschierflächen noch eine Restwärme aus der Thermoformierung, so daß nur eine mehr oder weniger geringfügige Wiedererwärmung stattfinden muß. Der zeitliche Abstand kann auch für eine gegebenenfalls gewünschte Absenkung der Temperatur innerhalb des PP-Schaumes im Verbundmaterial genutzt werden, um empfindlichere PP-Schaumsorten zu stabilisieren. Die Temperaturgrenzen können mit einigen Versuchen ermittelt werden.
Bei der Wiedererwärmung läßt sich die Temperatur an den Schweißflächen bzw. Kaschierflächen ohne weiteres über die Temperatur der Thermoformierung hinaus für kurze Zeit erhöhen, weil der PP-Schaum eine geringe Wärmeleitfähigkeit besitzt.

Wahlweise erfolgt die Verbindung mit einem weiteren Formteil/Werkstück durch Kaschieren auch in einem einzigen Vorgang unter Thermoformieren/Tiefziehen des Verbundmaterials . Bei der Verfahrensweise ergibt sich eine optimale Wärmeausnutzung.

Beim Tiefziehen bzw. Thermoformieren findet eine mehr oder weniger durchgehende Erwärmung des Verbundmateriales auf Verformungstemperatur statt.
Bei der gleichzeitigen Thermoformierung des Verbundmaterials und dessen Verbindung mit einem weiteren Formteil/Werkstück kann es wegen der unterschiedlichen Anforderungen an die Erwärmung für das Thermoformieren und an die Erwärmung für das Kaschieren vorteilhaft sein, die durchgehende Materialerwärmung für den Tiefziehvorgang auf einem deutlich niedrigeren Temperaturniveau als die Erwärmung beim Kaschieren durchzuführen. Die Temperatur kann z.B. 20 Grad Celsius und mehr unter der oben beschriebenen Temperatur für das Kaschieren liegen. Die richtige Temperatur kann mit einigen Versuchen bestimmt werden.
Überraschender Weise bricht der so wärmebehandelte Schaum des Verbundmaterials nicht zusammen.

Die für das Thermoformieren/Tiefziehen erforderliche Wärme wird vorzugsweise an beiden Seiten des Verbundmaterials aufgebracht. Das Verbundmaterial kann außerhalb der Tiefziehform und/oder innerhalb der Tiefziehform erwärmt werden. Bei der Erwärmung außerhalb der Tiefziehform können die Heizeinrichtungen stationär angeordnet werden. Bei der Erwärmung innerhalb der Form sind vorzugsweise bewegliche Heizeinrichtungen vorgesehen, die in die geöffnete Form fahren können.

Die Tiefzieheinrichtung kann mit Druck und/oder Zug arbeiten. Zur Erzeugung des Zuges wird ein Saugdruck an das erwärmte Verbundmaterial angelegt. Die notwendige Abdichtung zwischen dem Verbundmaterial und der Tiefziehform entsteht durch geeignete Einklemmung des Materials am Rand. Für den Saugzug kann bereits ein geringer Saugzug von 0,1 bar ausreichend sein. Es ist von Vorteil, wenn die Tiefziehform zur Beaufschlagung mit dem Saugzug aus einem porösen Werkstoff besteht oder perforiert ist. Zum Einsatz für die Formwand können hierbei kommen: poröse Harze, Sintermetalle, Gitterstrukturen, nachträglich perforierte Werkzeuge oder Werkzeugeinsätze. Im Gegensatz zu einem reinen Presswerkzeug wird so die genaue Konturabbildung, Dickenvarianz und die Auffüllung eines Umbugbereiches(Materialfluß an kleinradigen Verformungsstellen) an dem Verbundmaterial gewährleistet.
Ein Umbug, z.B. an einer Sonnenblende, wird vorzugsweise mittels eine Manschette bzw. Brille erzeugt. Die Manschette oder Brille wird zwischen der Trennebene der Werkzeuge bzw. Trennebene des die Sichtseite des Produktes bildenden Werkzeughälfte angebracht bzw. zwischen den Trennkanten des Werkzeuges angebracht. Der Innendurchmesser der Manschette oder Brille ist um die Maß des umzubugenden Bereiches kleiner als die Außenmaße des herzustellenden Formkörpers.
Der tiefzuziehende Werkstoffverbund wird durch diese Manschette in die Matrize und mit Hilfe des Unterdrucks an die Gegenform gedrückt und auf diese Weise um die Manschette herum gelegt. Die überstehende Folie wird gegebenenfalls abgeschnitten oder verbleibt bei der Montage oder nach dem Verbinden mit anderen Teilen in unsichtbaren Freiräumen. Zum Umlegen bzw. Umbiegen der Deckschicht oder des Verbundmaterials sind in der Form geeignete Werkzeuge vorgesehen.

Wahlweise können die Formteile/Werkstücke, mit denen das Verbundmaterial in weiterer Ausbildung der Erfindung verbunden wird, zugleich einen Bestandteil der Tiefziehform bzw. eine Verformungshilfe beim Tiefziehen bilden. Dabei werden die Formteile/Werkstücke in der Tiefziehanlage so positioniert, daß sich das Verbundmaterial durch Tiefziehen gegen die Formteile/Werkstücke bewegt und sich dort schließend anlegt.
Wahlweise wird das zugleich genutzt, um in der oben beschriebenen Weise eine Schweißoder Kaschierverbindung zu erzeugen.

Das beschriebene Tiefziehen mit Saugzug läßt sich in der Tiefzieheinrichtung auf verschiedenen Wegen durchführen. Grundsätzlich ist eine Saugleitung zur Tiefzieheinrichtung vorgesehen. Um eine vollständige und kurzfristige Absaugung der Luft zwischen dem Verbundmaterial und dem weiteren Formteil/Werkstück zu ermöglichen, können die Formteile/Werkstücke mit einer geeigneten Oberfläche versehen werden, die das Absaugen der eingeschlossenen Luft begünstigt. Z.B. wird die Absaugung durch eine geeignete Oberflächenrauhigkeit und/oder Feinporigkeit begünstigt und/oder ist das Formteil/Werkstück ganz oder teilweise luftdurchlässig gestaltet. Überraschenderweise ist ein Formteil in dem Sinne ausreichend luftdurchlässig, das aus Partikelschaum gefertigt ist. Partikelschaum setzt sich aus kleinen Schaumpartikeln mit einem Durchmesser von z.B. 0,5 bis 15 mm, zusammen. Die kleinen Schaumpartikel werden gesondert gefertigt und zur Herstellung eines Formteiles in eine Form gefüllt. Das geschieht zumeist unter Druck mit Druckluft, bis die Form vollständig gefüllt ist. Danach erfolgt eine Entlüftung. Die Druckluft entweicht bzw. wird mit Heißdampf ausgetrieben. Der Heißdampf ist so temperiert, daß er die Schaumpartikel an der Oberfläche anschmilzt. Unter dem entstehenden Druck findet eine Verschweißung der Schaumpartikel statt. Die Verschweißung ist jedoch nicht vollflächig. Es verbleiben kleine Zwickelräume. Überraschender Weise kann die Evakuierung der Tiefziehform durch ein solches Partikelschaumformteil hindurch erfolgen.

Wahlweise kann ein weiteres Formteil/Werkstück auch an ein erfindungsgemäßes Verbundmaterial angeformt werden. Diese Überlegung geht von üblichen Formen für die Erzeugung von Formteilen aus Kunststoff aus. Dabei kann es sich handeln:
a) um Spritzformen, in denen Schmelze mit oder ohne Treibmittel eingespritzt wird
b) Formteilautomaten, in die in der oben beschriebenen Weise Kunststoffschaumpartikel eingetragen und durch Bedampfen miteinander verbunden werden.
In den Fällen wird das Verbundmaterial entweder nur als Zuschnitt oder als thermoformierter Zuschnitt eingelegt. Die Schweißfläche oder Kaschierfläche des Verbundmaterials ist vor dem Einlegen in die Form oder in der Form so temperiert, daß der durch Einspritzen der Schmelze eindringende Kunststoff bzw. Kunststoffschaum oder die eingefüllten Schaumpartikel sich mit dem Verbundmaterial verbinden.
Die Erwärmung der betreffenden Flächen am Verbundmaterial kann so erfolgen, wie das oben zum Kaschieren beschrieben ist. Darüber hinaus kann eine Erwärmung dieser Flächen am Verbundmaterial im Formteilautomaten mit dessen Bedampfungseinrichtung erfolgen. Wahlweise werden ein oder mehrere Dampfstöße zur Vorwärmung der betreffenden Flächen am Verbundmaterial abgegeben, bevor das Einfüllen der Schaumpartikel erfolgt.
Die Vorwärmung der betreffenden Flächen am Verbundmaterial in der Form kann entfallen, wenn beim Spritzguß bzw. Spritzschäumen bzw. bei der Bedampfung der Schaumpartikel im Formteilautomaten so viel Wärme frei wird, daß dies auch für eine ausreichende Erwärmung der betreffenden Flächen an dem Verbundmaterial ausreicht.
Der oben beschriebene Vorgang wird bei Entstehen von Schaumkörpern auch als Hinterschäumen bezeichnet. Geläufig ist das Hinterschäumen für Kfz-Verkleidungen, z.B. Seitenverkleidungen, Sonnenblenden. Das gilt auch für das Hinterschäumen von Textilien.
Sofern das Verbundmaterial ganz oder teilweise Abstand von den umgebenden Wänden des Formhohlraumes hat, dringt der Kunststoff bzw. Kunststoffschaum dazwischen und wird bei Entstehen von Schaumkörpern vom Umschäumen gesprochen.

Die oben beschriebenen Formteilautomaten schließen wahlweise Formwerkzeuge ein, die derart gestaltet sind, daß die Werkzeugmatrize der äußeren Kontur des herzustellenden Produktes entspricht, aus einem porösen Werkstoff besteht oder perforiert ist. Zum Einsatz können hierbei poröse Harze, Sintermetalle, Gitterstrukturen, nachträglich perforierte Werkzeuge oder Werkzeugeinsätze kommen. Die Herstellung der Werkzeughälften kann durch die Herstellung eines Muttermodelles und das Abformen mit einem porösen oder porenbildenden Harz erfolgen oder mittels Fräsen aus porösen Halbzeugen, beispielsweis aus Harz oder Sintermetall.
Die Strukturierung der Werkzeugoberflläche oder von Teilbereichen derselben erfolgt wahlweise mittels Ätzung des Werkzeuges oder der Muttermodelloberfläche. Es kann auch eine Strukturierung der Muttermodelloberfläche mit einem strukturbilddenen Lack erfolgen.

Die in oben beschriebener Weise entstandenen Materialien sind Fertigteile oder zur Weiterverarbeitung bestimmte Halbzeuge. Die Weiterverarbeitung kann auch die Aufbringung weiterer Materialschichten in Form von Lacken, Folien, Textilien beinhalten. Das kann der Erhöhung der Kratz- und UV-Beständigkeit der Deckschicht dienen.

### Ausführungsbeispiel

3 Schaumstofffolien aus unvernetztem Polypropylen mit einer Dichte von jeweils 50 g/l werden mittels Flammkaschierung zu einem Verbundmaterial mit einer Dicke von 9 mm verschweißt. Nachfolgend wird eine TPO-Schicht mit einer Matrix aus Polypropylen aus einer Breitschlitzdüse mit einer Dicke von 1 mm direkt auf die PP-Folie aufkaschiert. Der Verbund wird als Zuschnitt für eine Sonnenblenden-Halbschale mit Einlegeteilen 25 min auf 155 Grad Celsius in einem Ofen erhitzt. Nach Ablauf der Zeit wird die Oberfläche 45 Sekunden auf 185 Grad Celsius nacherhitzt. Unmittelbar danach wird der Verbund in die Thermoformierungsanlagae eingegeben und mit beidseitiger Vakuumunterstützung verformt. Die Vakuumunterstützung wird bereits beim Schließvorgang aufgebaut.

## Patentansprüche

1. Verfahren zur Herstellung eines zwei oder mehrlagigen Verbundmaterials
a) aus einer kaschierfähigen bzw. verschweißbaren PP-Deckschicht, insbesondere aus eine TPO-Folie und/oder einem Textil, welches vorzugsweise aus einem Gewebe oder Vlies besteht
b) wobei die Deckschicht vorzugsweise ein Gewicht von mindestens 120 Gramm pro Quadratmeter, weiter bevorzugt ein Gewicht von mindestens 320 Gramm pro Quadratmeter und noch weiter bevorzugt ein Gewicht von mindestens 520 Gramm pro Quadratmeter besitzt
c) mit einem PP-Schaumschicht, vorzugsweise in Form einer Folie oder Bahn
d) durch Extrusion eines Schaumes aus unvemetztem PP, das in einem Schmelzetest eine Schmelzespannung von mindestens 5 cN erreicht wird, wobei die PP-Schmelze bei einer Temperatur von 200 Grad Celsius mit einem Ausstoß von 1 Kubikzentimeter pro Minute aus einem Behälter in eine Düse gedrückt wird, die eine Öffnungsweite von 1 mm bei einer Länge von 20 mm besitzt und wobei der austretende Schmelzestrang erfaßt und mit zunehmender Beschleunigung unter Messung der Zugkraft bis zum Abriß gezogen wird
e) und eine Kaschier- oder Schweißverbindung zwischen den beiden Schichten.

2. Verfahren nach Anspruch 1, **dadurch gekennzeichnet, daß** bei Verwendung von Materialmischungen der Anteil von PP in der Deckschicht und/oder in der Schaumschicht mindestens 5Gew%, vorzugsweise mindestens 30Gew% und noch weiter bevorzugt mindestens 50Gew% beträgt, bezogen auf die Gesamtmenge des Kunststoffes in der jeweiligen Schicht.

3. Verfahren nach Anspruch 1 oder 2, **dadurch gekennzeichnet, daß** PP HMS für den PP-Schaum verwendet wird, vorzugsweise in Mischung mit PP-Copolymeren und PP-Homopolymeren oder nach weiter bevorzugt allein mit PP-Homopolymeren verwendet wird, wobei der Mischungsanteil der PP-Homopolymere 5 bis 70Gew%, bezogen auf die gesamte Kunststoffmenge, beträgt.

4. Verfahren nach einem der Ansprüche 1 bis 3, daß das Verbundmaterial nur aus Materialmischungen besteht, die nur teilweise aus Kunststoff und im übrigen aus Füller bestehen, der kein Kunststoff ist.

5. Verfahren nach einem der Ansprüche 1 bis 4, **dadurch gekennzeichnet, daß** ein PP-Verbundmaterial mit einer Warmfestigkeit von 155 bis 165 Grad Celsius ausgewählt wird.

6. Verfahren nach einem der Ansprüche 1 bis 5, **dadurch gekennzeichnet, daß** ein Treibmittel mit einem Anteil an Kohlenwasserstoffen von mindestens 50Gew, vorzugsweise von mehr als 90 Gew%, bezogen auf das gesamte Treibmittel, für die Herstellung des PP-Schaumes verwendet wird.

7. Verfahren nach Anspruch 6, **gekennzeichnet durch** die Verwendung von inerten Gasen als Treibmittel mit einem Anteil bis zu 25Gew%, bezogen auf das gesamte Treibmittel.

8. Verfahren nach Anspruch 7, **gekennzeichnet durch** die Verwendung von Kohlendioxid und/oder Stickstoff als inertes Gas.

9. Verfahren nach einem der Ansprüche 1 bis 8, **dadurch gekennzeichnet, daß** der Schaum extrudiert wird mit einer Zellgröße von 0,4 bis 4 mm, vorzugsweise einer Zellgröße von 0,5 bis 1,5 mm und/oder vorzugsweise einer Dicke von 0,5 bis 10 mm, noch weitere bevorzugt einer Dicke von 2 bis 4 mm und/oder einem Raumgewicht von 20 bis 400 kg pro Kubikmeter, vorzugsweise einem Raumgewicht von 30 bis 150 kg pro Kubikmeter.

10. Verfahren nach einem der Ansprüche 1 bis 9, **dadurch gekennzeichnet, daß** die für das Verbundmaterial bestimmte PP-Schaumfolie nach Verlassen der Extrusionsdüse direkt auf das in dem Verbundmaterial vorgesehene Dickenmaß geschäumt wird.

11. Verfahren nach einem der Ansprüche 1 bis 10, **dadurch gekennzeichnet, daß**
a) die PP-Deckschicht und die PP-Schaumschicht und die TPO-Folie nach einer kurzzeitigen Erwärmung der Berührungsflächen auf eine Temperatur, die höchstens 20 Grad Celsius unter der Schmelztemperatur liegt, durch Kaschieren bzw. Schweißen miteinander verbunden werden
b) der Schaum für die PP-Schaumschicht direkt auf die Deckschicht aufgeschäumt wird oder
c) die Deckschicht auf die Schaumfolie extrudiert wird.

12. Verfahren nach einem der Ansprüche 1 bis 11, **dadurch gekennzeichnet, daß** das PP-Material mit einem Schmelzpunkt größer 155 Grad Celsius und vorzugsweise größer 165 Grad Celsius gewählt wird und ein TPO-Material für die Deckschicht so ausgewählt wird, daß ein Verbundmaterial mit einer Warmfestigkeit von 140 bis 180 Grad Celsius entsteht.

13. Verfahren nach einem der Ansprüche 1 bis 12, **dadurch gekennzeichnet, daß** beim bzw. nach dem Kalandrieren der TPO-Folie die PP-Schaumfolie gegen die heiße TPO-Folie gefahren wird.

14. Verfahren nach einem der Ansprüche 1 bis 13, **dadurch gekennzeichnet, daß**
a) das Verbundmaterial mit einem weiteren Formteil bzw. Werkstück insbesondere durch Kaschieren oder Verschweißen verbunden wird oder.
b) ein weiteres Formteil bzw. Werkstück an das Verbundmaterial angeformt wird.

15. Verfahren nach Anspruch 14, **dadurch gekennzeichnet, daß** das Verbundmaterial bei seiner Entstehung thermoformiert wird oder vor der Verbindung mit dem weiteren Formteil bzw. Werkstück und/oder bei der Verbindung mit dem weiteren Formteil bzw. Werkstück thermoformiert wird.

16. Verfahren nach Anspruch 15, **gekennzeichnet durch** eine Thermoformierung des Verbundmaterials in einer Form mittels Luftdruck und/oder Saugzug.

17. Verfahren nach einem der Ansprüche 14 bis 16, **dadurch gekennzeichnet, daß** die Erwärmung des Verbundmaterials auf Verformungstemperatur und/oder auf Schweißtemperatur oder Kaschiertemperatur in der Form und/oder vor der Form, insbesondere in einem Ofen, erfolgt.

18. Verfahren nach Anspruch 17, **dadurch gekennzeichnet, daß** die Erwärmung des Verbundmaterials auf Schweißtemperatur oder Kaschiertemperatur unter Ausnutzung der Wärme aus der Thermoformierung erfolgt.

19. Verfahren nach Anspruch 17 oder 18, **dadurch gekennzeichnet, daß** das weitere Formteil bzw. Werkstück in die zum Thermöformieren vorgesehene Form eingesetzt und das Verbundmaterial gegen das weitere Formteil bzw. Werkstück gedrückt oder gezogen wird und dort ganz oder teilweise zur Anlage kommt.

20. Verfahren nach Anspruch 19, **gekennzeichnet durch** eine luftleitende Oberfläche an den weiteren Formteilen bzw. Werkstücken und/oder eine Luftdurchlässigkeit der weiteren Formteile bzw. Werkstücke.

21. Verfahren nach Anspruch 20, **gekennzeichnet durch** die Verwendung von luftdurchlässigem Partikelschaumformteilen.

22. Verfahren nach einem der Ansprüche 14 bis 21, **dadurch gekennzeichnet, daß** das Verbundmaterial
a) in einem Formteilautomaten positioniert wird und der Formhohlraum mit Schaumpartikeln verfüllt und die Schaumpartikel durch Bedampfung miteinander und mit dem Verbundmaterial verschweißen
b) in einer Spritzgußform positioniert und Kunststoffschmelze, vorzugsweise treibmittelbeladene Schmelze, in den Formhohlraum gespritzt wird, die mit dem Verbundmaterial verschweißt.

23. Verfahren nach einem der Ansprüche 14 bis 22, **gekennzeichnet durch** eine Vorwärmung der Schweißflächen am Verbundmaterial für die Verbindung mit dem weiteren Formteil bzw. Werkstück.

24. Verfahren nach einem der Ansprüche 14 bis 23, **dadurch gekennzeichnet, daß** beim Thermoformieren eine Oberflächenprägung, insbesondere die Narbung, des Verbundmaterials erfolgt.

25. Verfahren nach Anspruch 24, **dadurch gekennzeichnet, daß** zur Oberflächenprägung des Verbundmaterials nach der durchgehenden Erwärmung des Verbundmaterials auf Thermoformierungstemperatur noch eine zusätzliche Erwärmung der zu prägenden Oberfläche auf Prägetemperatur vorgesehen ist.

26. Verfahren nach einem der Ansprüche 14 bis 25, **dadurch gekennzeichnet, daß** für die Thermoformierung und/oder die Verbindung mit weiteren Formteilen bzw. Werkstücke und/oder für das Anformen weiterer Formteile bzw. Werkstücke eine poröse und/oder mit Perforierung versehene Form verwendet wird.

27. Verfahren nach Anspruch 26, **dadurch gekennzeichnet, daß** die Form aus einem porösen Harz, insbesondere aus einem Porenharz, oder aus Metall, insbesondere aus einem Sintermetall, besteht.

28. Verfahren nach Anspruch 26 oder 27, **dadurch gekennzeichnet, daß** zur Herstellung der Form ein Muttermodell abgeformt wird oder daß die Form materialabtragend aus einem Halbzeug hergestellt wird.

29. Verfahren nach einem der Ansprüche 14 bis 28, **dadurch gekennzeichnet, daß** für die Thermoformierung des Verbundmaterials eine Form verwendet wird, in der das Verbundmaterial von einer Manschette oder Brille gehalten wird, deren Innenmaße den Außenmaßen des umzuformenden Werkstoffverbundes entsprechen.

30. Verfahren nach Anspruch 29, **dadurch gekennzeichnet, daß** eine teilbare Form verwendet wird, wobei die Manschette oder Brille im Trennebenenbereich der Form angeordnet ist und vorzugsweise an dem Formteil bzw. Formhälfte angeordnet ist, welche an der Sichtseite des Produktes liegt.

31. Verfahren nach Anspruch 29 oder 30, **gekennzeichnet durch** einen Umbug eines gegenüber der Schaumschicht überstehenden TPO-Folienrandes in der Form bzw **durch** einen Umbug eines gegenüber einem weiteren Formteil/Werkstück vorstehenden Randes des Verbundmaterials.

32. Verfahren nach Anspruch 31, **gekennzeichnet durch** einen Umbug mittels Schiebern

33. Verfahren nach einem der Ansprüche 1 bis 32, **gekennzeichnet durch** die Anwendung auf die Herstellung von Kraftfahrzeugteilen, Möbeln, Kindersitzen, Taschen jeder Art, Etuien, Fußbodenheizungen, Verkleidung von Türen, Kniekissen, Isoliermatten.

## Claims

1. Process for the production of a two- or multilayered composite material
a) comprising a laminable or weldable PP top layer, in particular comprising a TPO film and/or a textile, which preferably consists of a woven or nonwoven fabric
b) where the top layer preferably has a weight of at least 120 grams per square metre, further preferably a weight of at least 320 grams per square metre and still further preferably a weight of at least 520 grams per square metre
c) with a PP foam layer, preferably in the form of a foil or sheet
d) by extrusion of a foam of uncrosslinked PP, which achieves a melt tension of at least 5 cN in a melt test, where the PP melt is forced at a temperature of 200 degrees Celsius at an output rate of 1 cubic centimetre per minute from a container into a die which has an aperture width of 1 mm at a length of 20 mm, and where the exiting melt extrudate is gripped and pulled with increasing acceleration with measurement of the tensile force until it tears off
e) and a lamination or weld bond between the two layers.

2. Process according to Claim 1, **characterized in that**, on use of material mixtures, the proportion of PP in the top layer and/or in the foam layer is at least 5% by weight, preferably at least 30% by weight and still further preferably at least 50% by weight, based on the total amount of plastic in the respective layer.

3. Process according to Claim 1 or 2, **characterized in that** PP HMS is used for the PP foam, preferably mixed with PP copolymers and PP homopolymers or still further preferably alone with PP homopolymers, where the proportion of PP homopolymers in the mixture is from 5 to 70% by weight, based on the total amount of plastic.

4. Process according to one of Claims 1 to 3, **characterized in that** the composite material consists only of material mixtures which consist only partly of plastic and otherwise of filler which is not a plastic.

5. Process according to one of Claims 1 to 4, **characterized in that** a PP composite material having a heat resistance of from 155 to 165 degrees Celsius is selected.

6. Process according to one of Claims 1 to 5, **characterized in that** a blowing agent having a content of hydrocarbons of at least 50% by weight, preferably of more than 90% by weight, based on the total blowing agent, is used for the production of the PP foam.

7. Process according to Claim 6, **characterized by** the use of inert gases as blowing agent with a proportion of up to 25% by weight, based on the total blowing agent.

8. Process according to Claim 7, **characterized by** the use of carbon dioxide and/or nitrogen as inert gas.

9. Process according to one of Claims 1 to 8, **characterized in that** the foam is extruded with a cell size of from 0.4 to 4 mm, preferably a cell size of from 0.5 to 1.5 mm, and/or preferably a thickness of from 0.5 to 10 mm, still further preferably a thickness of from 2 to 4 mm, and/or a density of from 20 to 400 kg per cubic metre, preferably a density of from 30 to 150 kg per cubic metre.

10. Process according to one of Claims 1 to 9, **characterized in that** the PP foam film intended for the composite material is foamed directly to the thickness intended in the composite material after leaving the extrusion die.

11. Process according to one of Claims 1 to 10, **characterized in that**
a) the PP top layer and the PP foam layer and the TPO film are bonded to one another by lamination or welding after brief warming of the contact surfaces to a temperature which is at most 20 degrees Celsius below the melting point
b) the foam for the PP foam layer is foamed directly onto the top layer or
c) the top layer is extruded onto the foam film.

12. Process according to one of Claims 1 to 11, **characterized in that** the PP material having a melting point of greater than 155 degrees Celsius and preferably greater than 165 degrees Celsius is selected, and a TPO material is selected for the top layer in such a way that a composite material having a heat resistance of from 140 to 180 degrees Celsius is formed.

13. Process according to one of Claims 1 to 12, **characterized in that** the PP foam film is moved against the hot TPO film during or after calendering of the TPO film.

14. Process according to one of Claims 1 to 13, **characterized in that**
a) the composite material is bonded to a further moulding or workpiece, in particular by lamination or welding, or
b) a further moulding or workpiece is moulded onto the composite material.

15. Process according to Claim 14, **characterized in that** the composite material is thermoformed as it is formed or is thermoformed before bonding to the further moulding or workpiece and/or during bonding to the further moulding or workpiece.

16. Process according to Claim 15, **characterized by** thermoforming of the composite material in a mould by means of air pressure and/or suction drawing.

17. Process according to one of Claims 14 to 16, **characterized in that** the warming of the composite material to the deformation temperature and/or to the welding temperature or lamination temperature takes place in the mould and/or before the mould, in particular in an oven.

18. Process according to Claim 17, **characterized in that** the warming of the composite material to the welding temperature or lamination temperature takes place with utilization of the heat from the thermoforming.

19. Process according to Claim 17 or 18, **characterized in that** the further moulding or workpiece is inserted into the mould intended for the thermoforming, and the composite material is pressed or drawn against the further moulding or workpiece and comes into full or partial contact there.

20. Process according to Claim 19, **characterized by** the air-transporting surface on the further mouldings or workpieces and/or air permeability of the further mouldings or workpieces.

21. Process according to Claim 20, **characterized by** the use of air-permeable particle-foam mouldings.

22. Process according to one of Claims 14 to 21, **characterized in that** the composite material
a) is positioned in an automatic moulding machine, and the mould cavity is filled with foam particles, and the foam particles are welded to one another and to the composite material by steam treatment
b) is positioned in an injection mould, and plastic melt, preferably blowing agent-charged melt, is injected into the mould cavity and welds to the composite material.

23. Process according to one of Claims 14 to 22, **characterized by** pre-heating of the weld surfaces of the composite material for bonding to the further moulding or workpiece.

24. Process according to one of Claims 14 to 23, **characterized in that** surface embossing, in particular graining, of the composite material takes place during thermoforming.

25. Process according to Claim 24, **characterized in that** additional heating of the surface to be embossed to the embossing temperature is provided for the surface embossing of the composite material after complete heating of the composite material to the thermoforming temperature.

26. Process according to one of Claims 14 to 25, **characterized in that** a porous and/or perforated mould is used for the thermoforming and/or the bonding to further mouldings or workpieces and/or for the moulding to further mouldings or workpieces.

27. Process according to Claim 26, **characterized in that** the mould consists of a porous resin, in particular a pore resin, or of metal, in particular a sintered metal.

28. Process according to Claim 26 or 27, **characterized in that**, in order to produce the mould, a casting is taken from a master pattern or **in that** the mould is produced from a semifinished product by removal of material.

29. Process according to one of Claims 14 to 28, **characterized in that**, for the thermoforming of the composite material, a mould is used in which the composite material is held by a single or double sleeve whose internal dimension corresponds to the external dimension of the material composite to be shaped.

30. Process according to Claim 29, **characterized in that** a dividable mould is used, with the single or double sleeve being arranged in the region of the parting plane of the mould and preferably being arranged against the moulding or mould half which is on the visible side of the product.

31. Process according to Claim 29 or 30, **characterized by** a folding-back of a TPO film border projecting beyond the foam layer in the mould or by a folding-back of a border of the composite material protruding beyond a further moulding/workpiece.

32. Process according to Claim 31, **characterized by** a folding-back by means of slides.

33. Process according to one of Claims 1 to 32, **characterized by** the use for the production of motor vehicle parts, furniture, child seats, bags of all types, cases, floor heating, door panels, knee cushions and insulating mats.

## Revendications

1. Procédé de fabrication d'un matériau composite à deux couches ou plus
a) à partir d'une couche de couverture en PP, contre-collable ou soudable, en particulier d'une feuille de TPO et/ou d'un textile qui, de préférence, est constitué d'un tissu ou d'un non tissé,
b) où la couche de couverture a, de préférence, une masse d'au moins 120 grammes par mètre carré, plus particulièrement une masse d'au moins 320 grammes par mètre carré et plus particulièrement une masse d'au moins 520 grammes par mètre carré,
c) avec une couche de mousse de PP, de préférence sous forme d'une feuille ou d'une bande,
d) par extrusion d'une mousse en PP non réticulé, qui dans un essai de fusion atteint une tension de la masse fondue d'au moins 5 cN, la masse fondue de PP étant, à une température de 200 degrés Celsius, évacuée d'un récipient à un débit de 1 centimètre cube par minute pour arriver dans une buse, qui a une ouverture de 1 mm de largeur pour une longueur de 20 mm, le boudin de masse fondue sortant de la buse étant saisi, et, en présence d'une accélération croissante, étant tiré jusqu'à rupture, avec mesure de la force de traction,
e) et un assemblage par contrecollage ou soudage entre les deux couches.

2. Procédé selon la revendication 1, **caractérisé en ce que**, quand on utilise des mélanges de matériaux, la proportion du PP dans la couche de couverture et/ou dans la couche de mousse est d'au moins 5 % en poids, de préférence d'au moins 30 % en poids et plus particulièrement d'au moins 50 % en poids par rapport à la quantité totale de matière active se trouvant dans la couche considérée.

3. Procédé selon la revendication 1 ou 2, **caractérisé en ce qu'**on utilise pour la mousse de PP un PP à grande résistance à l'état fondu (HMS), de préférence en mélange avec des copolymères de PP et des homopolymères de PP, ou encore, plus particulièrement, on l'utilise seul avec des homopolymères du PP, la proportion de mélange des homopolymères du PP étant de 5 à 70 % en poids par rapport à la quantité totale de matière plastique.

4. Procédé selon l'une des revendications 1 à 3, **caractérisé en ce que** le matériau composite n'est constitué que de mélanges de matériaux qui ne sont que partiellement constitués d'une matière plastique, et pour le reste d'une matière de charge qui n'est pas une matière plastique.

5. Procédé selon l'une des revendications 1 à 4, **caractérisé en ce qu'**on choisit un matériau composite de PP ayant une stabilité dimensionnelle à chaud de 155 à 165 degrés Celsius.

6. Procédé selon l'une des revendications 1 à 5, **caractérisé en ce qu'**on utilise pour fabriquer la mousse de PP un agent porogène présentant une proportion d'hydrocarbures d'au moins 50 % en poids, de préférence supérieure à 90 % en poids par rapport à la totalité de l'agent porogène.

7. Procédé selon la revendication 6, **caractérisé par** l'utilisation de gaz inertes en tant qu'agents porogènes, selon une proportion allant jusqu'à 25 % en poids par rapport à la totalité de l'agent porogène.

8. Procédé selon la revendication 7, **caractérisé par** l'utilisation, en tant que gaz inerte , de dioxyde de carbone et/ou d'azote.

9. Procédé selon l'une des revendications 1 à 8, **caractérisé en ce que** la mousse est extrudée avec une taille d'alvéoles de 0,4 à 4 mm, de préférence une taille d'alvéoles de 0,5 à 10 mm et plus particulièrement une épaisseur de 2 à 4 mm et/ou une masse volumique de 20 à 400 kg par mètre cube, et de préférence une masse volumique de 30 à 150 kg par mètre cube.

10. Procédé selon l'une des revendications 1 à 9, **caractérisé en ce que** la feuille de mousse de PP servant de matériau composite subit, après sa sortie de la buse d'extrusion, un moussage l'amenant directement à l'épaisseur prévue dans le matériau composite.

11. Procédé selon l'une des revendications 1 à 10, **caractérisé en ce que**
a) la couche de couverture en PP et la couche de mousse de PP et la feuille de TPO sont assemblées les unes aux autres après un chauffage de courte durée des surfaces de contact, à une température qui est d'au plus 20 degrés Celsius inférieure à la température de fusion, l'assemblage étant réalisé par contrecollage ou soudage,
b) la mousse destinée à la couche de mousse PP est appliquée directement sur la couche de couverture par moussage, ou bien
c) la couche de couverture est extrudée sur la feuille de mousse.

12. Procédé selon l'une des revendications 1 à 11, **caractérisé en ce que** le matériau de PP est choisi avec un point de fusion supérieur à 155 degrés Celsius et de préférence supérieur à 165 degrés Celsius, et que l'on choisit pour la couche de couverture un matériau TPO tel que l'on obtienne un matériau composite ayant une stabilité dimensionnelle à chaud de 140 à 180 degrés Celsius.

13. Procédé selon l'une des revendications 1 à 12, **caractérisé en ce que** la feuille de mousse de PP est amenée contre la feuille de TPO chaude, au moment du calandrage de la feuille de TPO ou après ce calandrage.

14. Procédé selon l'une des revendications 1 à 13, **caractérisé en ce que**
a) le matériau composite est assemblé à un autre objet façonné ou une autre pièce en oeuvre, en particulier par contre-collage ou soudage, ou bien
b) un autre objet façonné ou une autre pièce en oeuvre est rapporté au matériau composite.

15. Procédé selon la revendication 14, **caractérisé en ce que** le matériau composite est thermoformé lors de sa formation, ou bien subit un thermoformage avant son assemblage avec l'autre objet façonné ou l'autre pièce en oeuvre et/ou lors de son assemblage avec l'autre objet façonné ou l'autre pièce en oeuvre.

16. Procédé selon la revendication 15, **caractérisé par** un thermoformage du matériau composite dans un moule à l'aide d'une pression d'air et/ou d'un tirage par aspiration.

17. Procédé selon l'une des revendications 14 à 16, **caractérisé en ce que** le chauffage du matériau composite à la température de déformation et/ou à la température de soudage ou à la température de contrecollage s'effectue dans le moule et/ou devant le moule, en particulier dans un four.

18. Procédé selon la revendication 17, **caractérisé en ce que** le chauffage du matériau composite à la température de soudage ou à la température de contrecollage a lieu par utilisation de la chaleur provenant du thermoformage.

19. Procédé selon la revendication 17 ou 18, **caractérisé en ce que** l'autre objet façonné ou l'autre pièce en oeuvre est placé dans le moule prévu pour le thermoformage, et le matériau composite est comprimé ou tiré contre l'autre objet façonné ou l'autre pièce en oeuvre, et vient s'y appuyer en totalité ou en partie.

20. Procédé selon la revendication 19, **caractérisé par** une surface conductrice d'air sur les autres objets façonnés ou pièces en oeuvre et/ou une perméabilité à l'air des autres objets façonnés ou pièces en oeuvre.

21. Procédé selon la revendication 20, **caractérisé par** l'utilisation d'objets façonnés en une mousse particulaire perméable à l'air.

22. Procédé selon l'une des revendications 14 à 21, **caractérisé en ce que** le matériau composite
a) est positionné dans un automate de façonnage, et la cavité du moule est remplie de particules de mousse, et les particules de mousse sont soudées les unes aux autres et au matériau composite par vaporisation,
b) est positionné dans un moule d'injection, et la masse fondue de matière plastique, de préférence la masse fondue chargée d'agent porogène, qui est injectée dans la cavité du moule, est soudée au matériau composite.

23. Procédé selon l'une des revendications 14 à 22, **caractérisé par** un préchauffage des surfaces de soudage sur le matériau composite, pour permettre l'assemblage avec l'autre objet façonné ou l'autre pièce en oeuvre.

24. Procédé selon l'une des revendications 14 à 23, **caractérisé en ce qu'**il se produit lors du thermoformage un gaufrage superficiel, en particulier un grainage, du matériau composite.

25. Procédé selon la revendication 24, **caractérisé en ce que**, pour le gaufrage superficiel du matériau composite, on prévoit, après le chauffage continu du matériau composite à la température de thermoformage, un chauffage supplémentaire, à la température de gaufrage, de la surface devant être gaufrée.

26. Procédé selon l'une des revendications 14 à 25, **caractérisé en ce que**, pour le thermoformage et/ou l'assemblage avec d'autres objets façonnés ou d'autres pièces en oeuvre, et/ou pour rapporter d'autres objets façonnés ou d'autres pièces en oeuvre, on utilise un moule poreux et/ou pourvu de perforations.

27. Procédé selon la revendication 26, **caractérisé en ce que** le moule est constitué d'une résine poreuse, en particulier une résine alvéolaire, ou d'un métal, en particulier un métal fritté.

28. Procédé selon la revendication 26 ou 27, **caractérisé en ce que**, pour fabriquer le moule, on réalise un modèle-maître, ou **en ce que** le moule est fabriqué par enlèvement de matière à partir d'un semi-produit.

29. Procédé selon l'une des revendications 14 à 28, **caractérisé en ce que**, pour le thermoformage du matériau composite, on utilise un moule dans lequel le matériau composite est maintenu par une manchette ou une lunette dont les dimensions intérieures correspondent aux dimensions extérieures du composite plastique devant être formé.

30. Procédé selon la revendication 29, **caractérisé en ce qu'**on utilise un moule divisible, la manchette ou la lunette étant disposées dans la zone du plan de séparation du moule, et de préférence contre la partie de moule ou la moitié de moule qui se trouve sur le côté visible du produit.

31. Procédé selon la revendication 29 ou 30, **caractérisé par** un repliement d'un bord de la feuille de TPO qui dépasse par rapport à la couche de mousse, dans le moule, ou encore par un repliement d'un bord du matériau composite, qui est en saillie par rapport à un autre objet façonné/pièce en oeuvre.

32. Procédé selon la revendication 31, **caractérisé par** un repliement par des barres.

33. Procédé selon l'une des revendications 1 à 32, **caractérisé par** une utilisation pour fabriquer des éléments de véhicules à moteur, des meubles, des sièges pour enfants, des tables de tous types, des étuis, des chauffages au sol, des revêtements de porte, des genouillères, des mats isolants.
